(19) **Europäisches Patentamt / European Patent Office / Office européen des brevets**

(11) **EP 4 293 383 B1**

(12) **EUROPEAN PATENT SPECIFICATION**

(45) Date of publication and mention
of the grant of the patent:
**12.11.2025 Bulletin 2025/46**

(21) Application number: **23178364.8**

(22) Date of filing: **09.06.2023**

(51) International Patent Classification (IPC):
**G01S 7/48** (2006.01)    **G01S 7/481** (2006.01)
**G01S 7/4863** (2020.01)    **G01S 7/4865** (2020.01)
**G01S 7/486** (2020.01)    **G01S 17/10** (2020.01)

(52) Cooperative Patent Classification (CPC):
**G01S 17/10; G01S 7/4808; G01S 7/4817;
G01S 7/4863; G01S 7/4865; G01S 7/4868**

(54) **LIDAR DEVICE WITH UNIFORM RECEIVING ILLUMINANCE AND EMISSION PARAMETER
ADJUSTMENT METHOD OF THE SAME**

LIDAR-GERÄT MIT GLEICHMÄSSIGER EMPFANGSBELEUCHTUNGSSTÄRKE UND VERFAHREN
ZUR EINSTELLUNG DER EMISSIONSPARAMETER DESSELBEN

DISPOSITIF LIDAR À ÉCLAIREMENT DE RÉCEPTION UNIFORME ET SON MÉTHODE
D'AJUSTEMENT DES PARAMÈTRES D'ÉMISSION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.06.2022 CN 202210668020**

(43) Date of publication of application:
**20.12.2023 Bulletin 2023/51**

(73) Proprietor: **Suteng Innovation Technology Co.,
Ltd
Shenzhen City Guangdong 518000 (CN)**

(72) Inventor: **GONG, Changsheng
Shenzhen City (CN)**

(74) Representative: **Ran, Handong et al
Maucher Jenkins
Seventh Floor Offices
Artillery House
11-19 Artillery Row
London SW1P 1RT (GB)**

(56) References cited:
**CN-A- 113 777 584    US-A1- 2021 176 389**

## Description

## TECHNICAL FIELD

The present invention pertains to the technical field of LiDAR, and in particular, to a LiDAR device and a ranging adjustment method of the same.

## BACKGROUND

With continuous development of fields of artificial intelligence and autonomous driving, increasingly high requirements are also imposed on detection accuracy of LiDAR.

In the LiDAR, due to a characteristic of a lens, illuminance of an edge field of view in an illuminated field of view is lower than that of a central field of view. In addition, the larger the detection angle of view, the lower the illuminance of the edge field of view. In addition, to improve imaging quality in the edge field of view, vignetting needs to be set for light in the edge field of view, which aggravates a reduction in illuminance of the edge field of view, thereby affecting accuracy of ranging.

US 2021176389 A1 discloses a light source device including a plurality of laser light emitting elements and a drive unit. The drive unit drives each of the laser light emitting elements according to a light emission parameter that defines a light emission operation of the laser light emitting elements per predetermined unit, the light emission parameter being set on the basis of captured data by an image sensor that receives and captures light emitted from the laser light emitting elements and reflected by a subject.

CN113777584A discloses a method and device for automatically controlling the signal strength of a direct time-of-flight 3D sensing system. The device comprises: a controller coupled with a transmitting device and a receiving device and configured to adjust at least one of the luminescence intensity of the transmitting device, the sensitivity of the receiving device and the signal-to-noise ratio of the measurement result according to a signal histogram. The receiving device is coupled with the controller and configured to receive the light reflected by the measured object and generate a signal histogram.

## SUMMARY

The present invention aims to provide a ranging adjustment method of a LiDAR device, to resolve a problem that ranging accuracy is affected because illuminance of a conventional LiDAR device in a field of view is non-uniform. The invention is set out in the appended set of claims.

A first aspect of embodiments of the present invention provides a ranging adjustment method of a LiDAR device according to independent claim 1.

Optionally, a formula for calculating the number of superimpositions of the histogram data corresponding to the receiving unit is as follows:

$$num2 = (\frac{coe1}{coe2})^2 * num1$$

where $coe1$ is an attenuation coefficient of a reference receiving unit, $coe2$ is an attenuation coefficient of the receiving unit corresponding to the emission unit, $num1$ is the number of superimpositions of histogram data corresponding to the reference receiving unit, and $num2$ is the number of superimpositions of histogram data corresponding to the receiving unit corresponding to the emission unit.

Optionally, the steps of driving the corresponding receiving unit to receive a corresponding echo laser beam signal, and superimposing the echo laser beam signal into corresponding histogram data specifically include:

   obtaining an attenuation coefficient of the receiving unit corresponding to the emission unit;
   calculating the number of echo superimpositions for the receiving unit based on the attenuation coefficient of the receiving unit; and
   performing corresponding histogram data superimposition on the echo laser beam signal based on the number of the echo superimpositions to form the corresponding histogram data.

Optionally, the ranging adjustment method of a LiDAR device further includes:

   obtaining a peak value of the histogram data;
   determining whether the peak value of the histogram data is less than a preset threshold; and
   when the peak value of the histogram data is less than the preset threshold, adjusting the number of emissions and/or emission power for a next emission.

A second aspect of the embodiments of the present invention provides a LiDAR device according to independent claim 5.

Optionally, the drive and conversion circuit includes: a laser beam drive circuit respectively connected to the processor and the laser beam emission module, where the laser beam drive circuit is configured to be correspondingly turned on or off based on a control signal output by the processor, and to adjust the number of laser beam emissions and/or emission power of the emission unit in a frame of a scanning image; and a signal conversion circuit respectively connected to the laser beam receiving module and the processor, where the signal conversion circuit is configured to: convert a current signal converted and output by the receiving unit into a corresponding echo pulse signal, and output the echo pulse signal to the processor.

The embodiments of the present invention have beneficial effects. In the foregoing ranging adjustment method of a LiDAR device, the position information of the receiving unit corresponding to the to-be-scanned emission unit is determined, and a table is queried based on the position information to determine the attenuation coefficient of the receiving unit; the number of required laser beam emissions and/or the emission power is calculated based on the attenuation coefficient, and laser beam emission and reception work is performed based on the number of laser beam emissions and/or the emission power; and the corresponding histogram data is obtained based on the number of echo superimpositions of the corresponding histogram, the distance information of the to-be-detected object is determined based on the histogram data, and the number of laser beam emissions and/or the emission power of the emission unit corresponding to the receiving unit at the corresponding position is adjusted, so that ranging accuracy and a ranging capability are improved and the entire receiving array has the same ranging capability, thereby improving ranging uniformity.

## BRIEF DESCRIPTION OF THE DRAWINGS

FIG. 1 is a first schematic structural diagram of a LiDAR device according to an embodiment of the present invention;
FIG. 2 is a schematic histogram of a ranging adjustment method of a LiDAR device according to an embodiment of the present invention;
FIG. 3 is a first schematic flowchart of a ranging adjustment method of a LiDAR device according to an embodiment of the present invention;
FIG. 4 is a schematic diagram of an attenuation coefficient of a receiving array in a LiDAR device according to an embodiment of the present invention;
FIG. 5 is a first specific flowchart of step S30 of the ranging adjustment method of a LiDAR device shown in FIG. 3;
FIG. 6 is a first specific flowchart of step S40 of the ranging adjustment method of a LiDAR device shown in FIG. 3;
FIG. 7 is a second schematic flowchart of a ranging adjustment method of a LiDAR device according to an embodiment of the present invention;
FIG. 8 is a schematic diagram of an echo waveform in a ranging adjustment method of a LiDAR device according to an embodiment of the present invention;
FIG. 9 is a second schematic structural diagram of a LiDAR device according to an embodiment of the present invention; and
FIG. 10 is a third schematic structural diagram of a LiDAR device according to an embodiment of the present invention.

## DESCRIPTION OF THE INVENTION

In addition, the terms such as "first" and "second" are merely intended for a purpose of description, and shall not be understood as an indication or implication of relative importance or implicit indication of a quantity of indicated technical features. Therefore, a feature with a determiner such as "first" or "second" may expressly or implicitly include one or more features. In the description of the present invention, "a plurality of" means two or more, unless otherwise specifically defined.

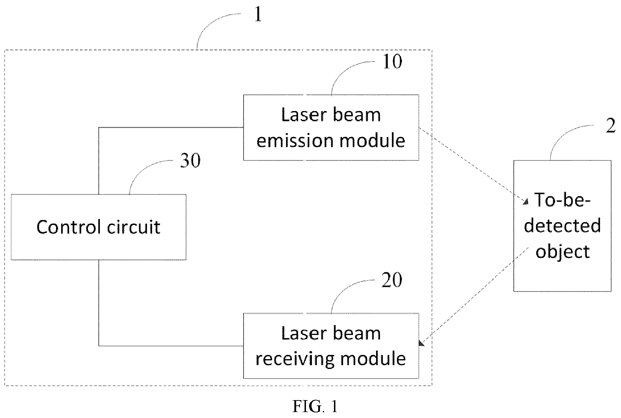

A first aspect of the embodiments of the present invention proposes a ranging adjustment method of a LiDAR device 1. As shown in FIG. 1, the LiDAR device 1 includes a laser beam emission module 10 and a laser beam receiving module 20, the laser beam emission module 10 and the laser beam receiving module 20 are driven by a corresponding control circuit 30 to perform laser beam emission and reception work, the laser beam emission module 10 consists of a single emission unit or $m1$ (rows) x $n1$ (columns) emission units arranged into an array, and the laser beam receiving module 20 consists of $m2$ (rows) x $n2$ (columns) receiving units arranged into an array, where $m1$ and $n1$ are both greater than or equal to 1, $m2$ and $n2$ are both greater than or equal to 1, $m1$ and $m2$ can be equal or unequal, and likewise, $n1$ and $n2$ can be equal or unequal. That is, optionally, the number of rows and the number of columns of the emission array can be in a one-to-one correspondence with those of the receiving array. Optionally, the emission array and the receiving array can have unequal numbers of rows and equal numbers of columns. Optionally, the emission array and the receiving array can have equal numbers of rows and unequal numbers of columns. This application imposes no limitation on specific structures of the emission array and the receiving array.

It can be understood that this application also imposes no limitation on a scanning form of the LiDAR. The LiDAR can include scanning members such as a rotating mirror or a galvanometer, and the LiDAR can also be a mechanical rotary LiDAR, that is, a turntable drives the emission array and the receiving array to rotate and scan. Optionally, the LiDAR in this application may also be pure solid-state LiDAR. A specific type of LiDAR is not limited in this application.

That is, the LiDAR device 1 is a LiDAR device 1 including at least one row or column of receiving units, for example, one emission unit and one array of receiving units. One emission unit emits the corresponding number of laser beams, and multiple receiving units receive the same number of echo laser beam signals simultaneously or in a preset timing sequence. Alternatively, the LiDAR device 1 includes an array of emission units and an array of receiving units, and the emission units and the receiving units are in a one-to-one, one-to-many or many-to-many correspondence to perform laser beam emission and reception. Therefore, a specific correspondence between the emission unit and the receiving unit is specifically set based on a structure and a requirement of the LiDAR device 1, and is not specifically limited herein. For example, an array LiDAR device uses an array emission device and an array receiving device, and there is no moving component inside the LiDAR, which is currently an effective design structure for improving reliability of the LiDAR device 1.

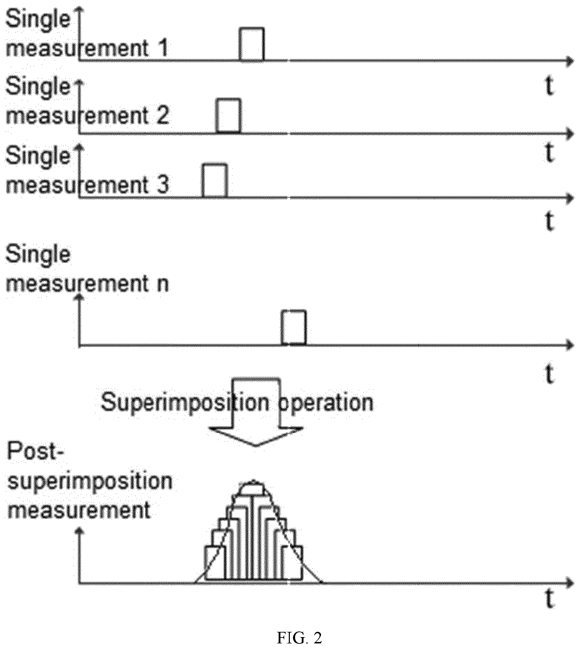

The laser beam emission module 10 also includes an emission lens disposed in the emission unit, the emission lens consists of one or more lenses, the laser beam receiving module 20 also includes a receiving lens disposed in an array structure, the receiving lens consists of one or more lenses, and the laser beam emission module 10 is driven by the control circuit 30 to emit a laser beam of corresponding power and/or the number of laser beams to the to-be-detected object 2. The laser beam is reflected by the to-be-detected object 2 back to the laser beam receiving module 20, and the receiving unit receives the corresponding echo laser beam signal through the receiving lens. The control circuit 30 converts the echo laser beam signal into a corresponding echo pulse signal, and superimposes the echo pulse signal into the corresponding histogram data. Herein, as shown in FIG. 2, the histogram data refers to histogram data with changing amplitude in a time sequence that is formed by superimposing multiple converted and output echo pulse signals in a time sequence.

Taking the array LiDAR device as an example, an emission portion is an array structure formed by multiple emission units, and a receiving portion is an array structure formed by multiple receiving units. The emission lens disposed in the array structure consists of one or more lenses, and the receiving lens consists of one or more lenses.

In different fields of view, a light spot experiences inconsistent divergence. Generally, divergence of the light spot in an edge field of view in the lens is more severe than that in the middle field of view in the lens, and as a result, illuminance in the edge field of view in the field of view is lower than that in a central field of view. Under the same conditions of emission power and performance of a receiving device, the more divergent the light spot, the lower the illuminance and the weaker the final ranging capability; or the more concentrated the light spot, the higher the illuminance and the stronger the ranging capability. With optical lenses at different positions, different receiving units have inconsistent ranging capabilities.

Receiving units with optical lens at different positions have different attenuation coefficients, and therefore, have greatly different ranging capabilities, which affects uniformity of the ranging capabilities of the receiving array.

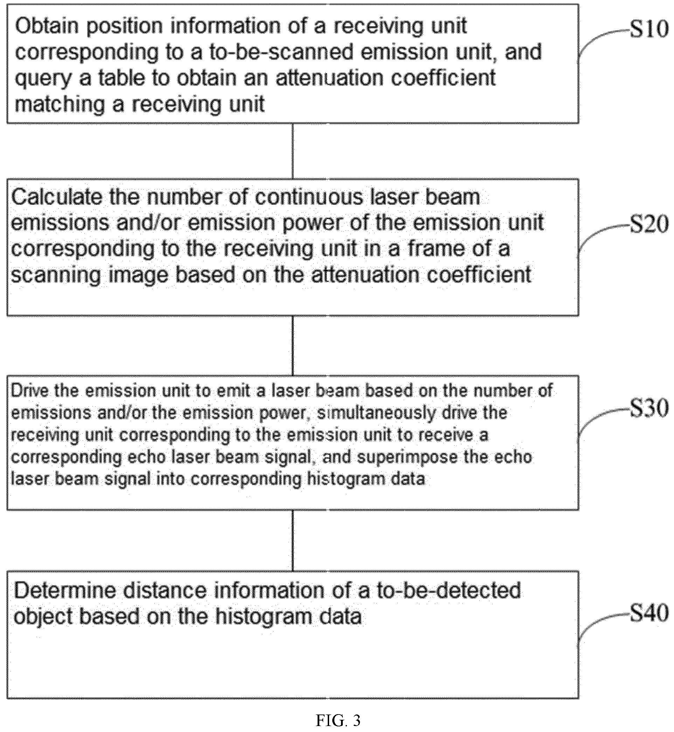

In order to balance and uniformize the ranging capabilities of the receiving units at different receiving lens positions and improve ranging accuracy, a ranging adjustment method is proposed. As shown in FIG. 3, the ranging adjustment method includes the following steps: Step S10: Obtain position information of a receiving unit corresponding to a to-be-scanned emission unit, and query a table to obtain an attenuation coefficient matching the receiving unit.

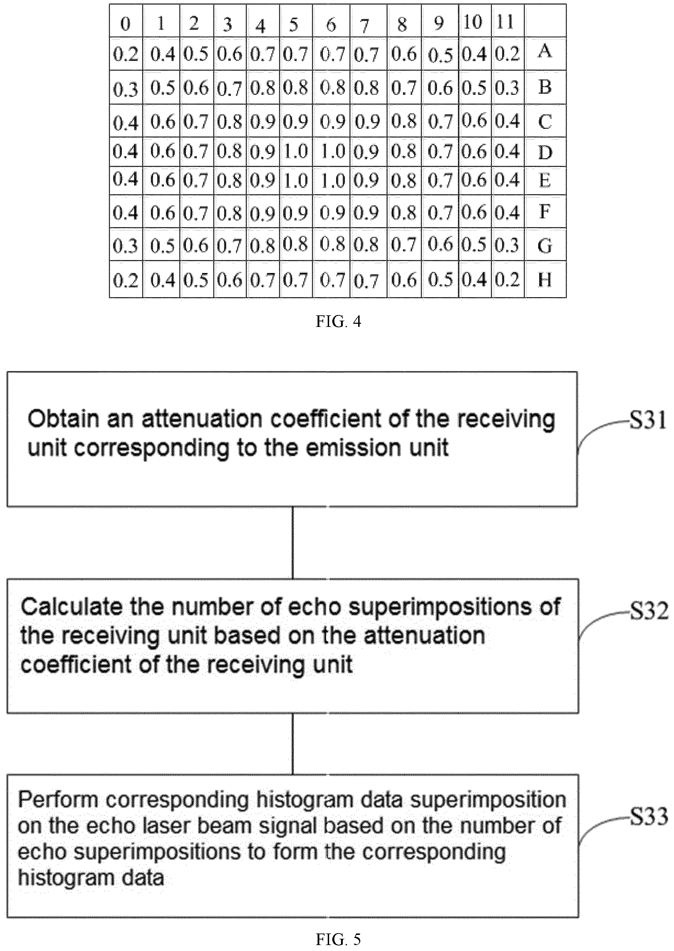

In this embodiment, the position information refers to position information of the receiving unit in the receiving array. As shown in FIG. 4, each receiving unit is in a corresponding row and column position, the receiving units corresponding to positions have different attenuation coefficients, and the corresponding position information and the attenuation coefficients have a mapping relationship to form an attenuation coefficient table stored in the control circuit 30. When the control circuit 30 drives the corresponding emission units or receiving units one by one or simultaneously based on an emission and reception manner, for example, a manner of performing emission and reception successively or simultaneously. The position information of one or more receiving units corresponding to the to-be-scanned emission unit is obtained in advance, and the matched attenuation coefficient is found by querying the attenuation coefficient table.

Herein, the attenuation coefficient refers to a ratio of the number of received photons to the number of incident photons. For example, when 100 photons are incident and 80 photons are received by the receiving unit, it indicates that the attenuation coefficient is 80%, that is, 0.8. When the attenuation coefficient is 1, it indicates that the number of photons incident on the receiving lens is equal to the number of received photons, and the number of photons is not attenuated, thereby obtaining the maximum attenuation coefficient. The attenuation coefficient is related to the position of the receiving unit relative to the receiving lens and a material of the receiving lens.

Herein, an attenuation coefficient of each receiving unit can be calculated and calibrated theoretically based on a position relationship and an angle, or can be calibrated based on actual optical detection, that is, the attenuation coefficient of each receiving unit is calculated theoretically based on a divergence angle of an outgoing light spot of the corresponding emission unit and/or is calibrated and determined via optical detection. After the attenuation coefficient of each receiving unit is determined, the attenuation coefficient and the position relationship of each receiving unit form mapping and are stored to form the attenuation coefficient table.

Step S20: Calculate the number of continuous laser beam emissions and/or emission power for the emission unit corresponding to the receiving unit in a frame of a scanning image based on the attenuation coefficient.

Step S30: Drive the emission unit to emit a laser beam based on the number of emissions and/or the emission power, simultaneously drive the receiving unit corresponding to the emission unit to receive a corresponding echo laser beam signal, and superimpose the echo laser beam signal into corresponding histogram data.

In this embodiment, in order to improve the ranging accuracy and the ranging capability, for a receiving unit with a small attenuation coefficient (that is, a low ranging capability), an overall ranging capability of a LiDAR system can be improved by increasing the laser beam emission power and/or the number of laser beam emissions of the emission unit. Herein, the number of laser beam emissions of each laser beam emission unit in the frame of scanning image is increased, that is, the number of echo superimpositions of the histogram data is increased, to improve a signal-to-noise ratio of a signal and improve the ranging capability. The emission power is increased to increase intensity of the echo signal, thereby improving the ranging capability. One of the two methods can be selected or the two methods can be combined. For example, adjustment can be performed separately in the time sequence. For example, if the emission power is determined based on a power consumption requirement setting, the number of emissions is increased priorly; or based on a device limitation, if the emission frequency is the maximum, the emission power is increased priorly. Specifically, the number of emissions and/or the emission power may be set with reference to a power consumption requirement or a limitation on detection frequency.

In addition, in order to match the attenuation coefficients with different receiving units, the number of laser beam emissions and/or the emission power is determined in a corresponding calculation method. Herein, the attenuation coefficient is negatively correlated with the number of laser beam emissions, that is, the larger the attenuation coefficient of the receiving unit, the smaller the number of laser beam emissions required for the corresponding emission unit; or the smaller the attenuation coefficient of the receiving unit, the larger the number of laser beam emissions required for the corresponding emission unit.

In addition, the attenuation coefficient is negatively correlated with the emission power, that is, the larger the attenuation coefficient of the receiving unit, the smaller the emission power required for the corresponding emission unit; or the smaller the attenuation coefficient of the receiving unit, the larger the emission power required for the corresponding emission unit.

After the number of laser beam emissions and/or the emission power of the to-be-scanned emission unit is determined, the control circuit 30 drives the corresponding to-be-scanned emission unit and the corresponding receiving unit to perform continuous laser beam emission and reception work multiple times. In addition, the control circuit 30 forms the histogram data based on multiple echo pulse signals in a changing time sequence that are converted by the receiving unit.

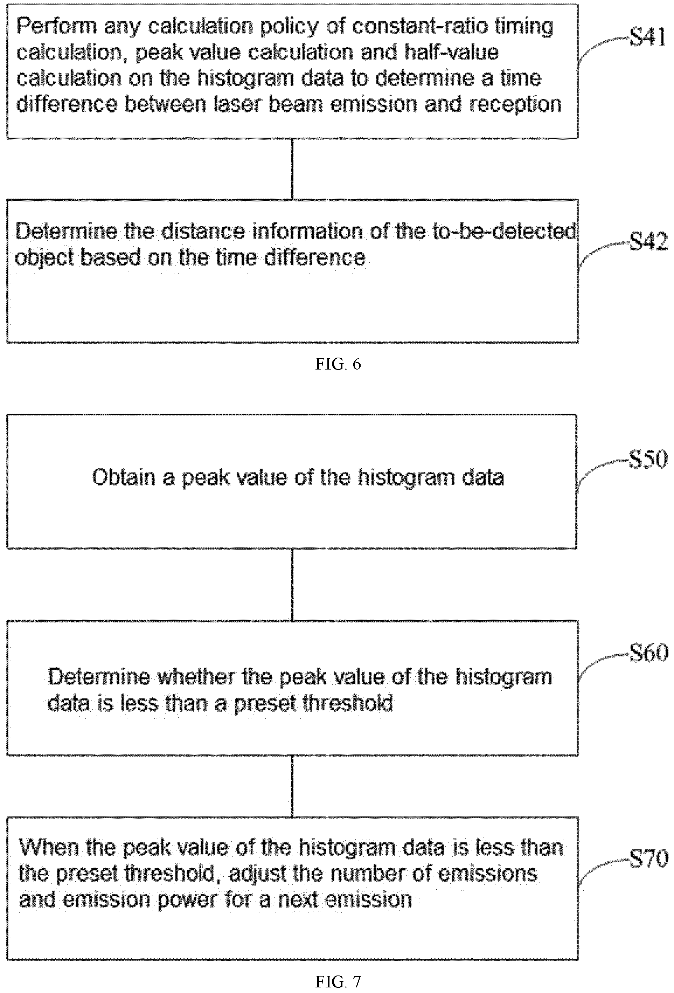

Step S40: Determine distance information of a to-be-detected object 2 based on the histogram data. After the histogram data is determined, the control circuit 30 determines the distance information of the to-be-detected object 2 based on amplitude of the histogram data and the corresponding calculation policy, where the distance information can be determined by a corresponding calculation method. As shown in FIG. 6, optionally, determining the distance information of the to-be-detected object 2 based on the histogram data specifically includes:

Step S41: Perform, on the histogram data, a calculation policy selected from constant-ratio timing calculation, peak value calculation and half-value calculation to determine a time difference between laser beam emission and reception. Step S42: Determine the distance information of the to-be-detected object 2 based on the time difference and a speed of light.

Further, based on different emission and receiving correspondences between emission units and receiving units, the attenuation coefficients for determining the final number of emissions are different. Optionally, the ranging adjustment method of a LiDAR device further includes:

obtaining a correspondence between the to-be-scanned emission unit and the receiving unit; and the step of querying a table to obtain an attenuation coefficient matching the receiving unit includes:

querying the table based on the correspondence to obtain the attenuation coefficient matching the receiving unit, where when the correspondence between the to-be-scanned emission unit and the receiving unit is a one-to-one correspondence, the attenuation coefficient matching the receiving unit is determined to be an attenuation coefficient of the receiving unit corresponding to the to-be-scanned emission unit; or when the correspondence between the to-be-scanned emission unit and the receiving unit is a one-to-many or many-to-many correspondence, the attenuation coefficient matching the receiving unit is determined to be a minimum one of attenuation coefficients of multiple receiving units corresponding to the to-be-scanned emission unit.

In this embodiment, before scanning, the correspondence between the emission unit and the receiving unit in the LiDAR device 1 is first obtained, and then the corresponding attenuation coefficient and the number of laser beam emissions and/or the emission power corresponding to the attenuation coefficient are determined and selected.

When the emission unit and the receiving unit are disposed one to one to perform emission and reception, the attenuation coefficient of the to-be-scanned receiving unit is used to calculate the attenuation coefficient corresponding to the number of laser beam emissions and/or the emission power, and the attenuation coefficient of the receiving unit is used to determine the number of laser beam emissions and/or the emission power. The control circuit 30 performs corresponding histogram data superimposition on the echo laser beam signal based on the corresponding number of echo superimpositions, thereby forming the histogram data. In addition, the histogram data is used to determine the distance information of the to-be-detected object 2, where the number of laser beam emissions is greater than or equal to the number of echo superimpositions.

In addition, when the emission units and the receiving units are disposed one to many or many to many, in order to improve the overall uniformity of ranging and ensure that multiple receiving units all can receive echo laser beam signals corresponding to the number of emissions and/or the emission power, position information of multiple receiving units corresponding to the to-be-scanned emission unit is obtained, and the table is queried to obtain the attenuation coefficients matching the multiple receiving units. In addition, the number of laser beam emissions of the corresponding emission unit is determined via the minimum attenuation coefficient, to ensure that the multiple receiving units corresponding to the emission unit can receive multiple echo laser beam signals corresponding to a laser beam emitted by the emission unit. For example, attenuation coefficients of four receiving units corresponding to the to-be-scanned emission unit are 0.6, 0.6, 0.4, and 0.2 separately. The attenuation coefficient of 0.2 is used as a target attenuation coefficient, and the number of laser beam emissions and/or the emission power of the emission unit is calculated via the target attenuation coefficient to determine the number of laser beam emissions and/or the emission power. The emission unit is driven to superimpose the echo laser beam signal based on the determined number of laser beam emissions and/or emission power, to generate the corresponding histogram data. Herein, the number of superimpositions of echo signals of each of the multiple receiving units may be the same as the number of emissions of the corresponding emission unit.

As an optional embodiment, after the number of laser beam emissions and/or the emission power is determined, in order to obtain matched amplitude and the number of times of the histogram data of the corresponding receiving unit, it is necessary to obtain the number of echo superimpositions of each corresponding receiving unit. Optionally, a formula for calculating the number of superimpositions of the corresponding histogram data of the receiving unit is as follows:

$$num2 = (\frac{coe1}{coe2})^2 * num1 \ ;$$

where $coe1$ is an attenuation coefficient of a reference receiving unit, $coe2$ is an attenuation coefficient of the receiving unit corresponding to the to-be-scanned emission unit, $num1$ is the number of superimpositions of histogram data corresponding to the reference receiving unit, and $num2$ is the number of superimpositions of histogram data corresponding to the receiving unit corresponding to the to-be-scanned emission unit. The number of echo superimpositions of the histogram data corresponding to each of the multiple receiving units can be calculated based on the formula. Echo laser beam signals are superimposed based on the number of echo superimpositions corresponding to each receiving unit to obtain corresponding histogram data.

Herein, a reference receiving unit may be any receiving unit in the receiving array with an attenuation coefficient and the number of emissions and/or the emission power of the emission unit corresponding to the attenuation coefficient being known. Generally, a receiving unit having the maximum attenuation coefficient in the middle of the receiving array can be selected as the reference receiving unit. Based on the number of laser beam emissions of the emission unit corresponding to the reference receiving unit, the number of laser beam emissions of the emission unit corresponding to receiving units at other positions and the number of echo superimpositions of the corresponding histogram data are determined via a calculation formula, and the number of laser beam emissions is determined based on the number of echo superimpositions. Herein, the number of laser beam emissions is greater than or equal to the number of echo superimpositions of the histogram data, each time the emission unit performs emission, the receiving unit performs receiving correspondingly. The control circuit 30 superimposes the histogram data based on the calculated number of echo superimpositions.

For example, the calculated number of echo superimpositions is 50, the determined number of emissions is 60, the emission unit emits corresponding laser beam signals 60 times, and the control circuit 30 performs histogram data superimposition on first 50 echo laser beam signals to form the corresponding histogram data, thereby further improving the uniformity of ranging.

The reference receiving unit can be selected correspondingly. Optionally, based on a divergence characteristic of a light spot of the receiving unit of the array structure, one or more receiving units at the center of the receiving units arranged into the array are selected as the reference receiving unit. For example, four receiving units at the center of the receiving units of the array structure shown in FIG. 4 have the maximum ranging capability and a corresponding attenuation coefficient of 1, that is, the maximum attenuation coefficient. Receiving units at edge positions have a corresponding attenuation coefficient between 0.2 and 0.7.

When the emission unit and the receiving unit are disposed one to one to perform emission and reception, taking a receiving unit with an attenuation coefficient of 0.2 as an example, assuming that the number of echo superimpositions at the center is 10, based on calculation, the corresponding number of echo superimpositions of the receiving unit with an attenuation coefficient of 0.2 is: 52 x 10 = 250, and the corresponding number of laser beam emissions is greater than or equal to 250. The number of laser beam emissions of an emission unit corresponding to the receiving unit with a small attenuation coefficient is increased, and the ranging accuracy is improved, thereby implementing overall ranging uniformity of the receiving array.

In addition, when the emission units and the receiving units are disposed one to many or many to many to perform emission and reception, in order to improve the overall uniformity of ranging, position information of multiple receiving units corresponding to the to-be-scanned emission unit is obtained, and the table is queried to obtain the attenuation coefficients matching the multiple receiving units. In addition, the number of echo superimpositions and the number of laser beam emissions of the corresponding emission unit are determined via the minimum attenuation coefficient, to ensure that the multiple receiving units corresponding to the emission unit can receive multiple echo laser beam signals corresponding to a laser beam emitted by the emission unit. For example, attenuation coefficients of four receiving units corresponding to the to-be-scanned emission unit are 0.6, 0.6, 0.4, and 0.2 separately, the attenuation coefficient of 0.2 is substituted for calculation, the corresponding number of echo superimpositions of the receiving unit with an attenuation coefficient of 0.2 is: 25 x 10 = 250, the corresponding number of laser beam emissions is greater than or equal to 250, and the four receiving units respectively receive more than 250 echo laser beam signals asynchronously or simultaneously.

Correspondingly, when the emission units and the receiving units are correspondingly disposed one to many or many to many, numbers of echo superimpositions required for the histogram data corresponding to the receiving units are different. For example, the multiple receiving units are A, B, C and D respectively and have attenuation coefficients of 0.1, 0.2, 0.3 and 0.4 respectively, and the respective corresponding numbers of required echo superimpositions are 10, 20, 30 and 40 respectively. The number of laser beam emissions of the emission unit is greater than or equal to 40, assuming that the number of laser beam emissions is 40, the receiving unit D can receive 40 echo laser beam signals, the number of times is used as the number of echo superimpositions to obtain the required histogram data, and corresponding receiving units A, B and C also receive 40 echo laser beam signals, but when the number of times is used as the number of echo superimpositions, the obtained histogram data does not meet a requirement for the respective preset amplitude and the number of times.

Therefore, when the emission units and the receiving units are correspondingly disposed one to one, one to many or many to many to perform emission and reception, in order to obtain the histogram data of the receiving unit, it is necessary to obtain the number of echo superimpositions of the corresponding receiving unit. As shown in FIG. 5, steps of driving the corresponding receiving unit to receive a corresponding echo laser beam signal, and superimposing the echo laser beam signal into corresponding histogram data specifically include:

　　Step S31: Obtain an attenuation coefficient of the receiving unit corresponding to the emission unit.
　　Step S32: Calculate the number of echo superimpositions for the receiving unit based on the attenuation coefficient of the receiving unit.
　　Step S33: Perform corresponding histogram data superimposition on the echo laser beam signal based on the number of the echo superimpositions to form the corresponding histogram data.

In this embodiment, the number of laser beam emissions and/or the emission power is determined via the minimum attenuation coefficient of the multiple receiving units, the receiving units synchronously receive echo laser beam signals corresponding to the number of emissions and/or the emission power, and the control circuit 30 correspondingly superimposes the histogram data based on the number of echo superimpositions corresponding to the receiving units, thereby further improving the uniformity of ranging.

For example, the multiple receiving units are A, B, C and D respectively and have attenuation coefficients of 0.1, 0.2, 0.3 and 0.4 respectively, and the respective corresponding numbers of required echo superimpositions are 10, 20, 30 and 40 respectively. The number of laser beam emissions of the emission unit is greater than or equal to 40, assuming that the number of laser beam emissions is 40, the receiving unit D can receive 40 echo laser beam signals, the number of times is used as the number of echo superimpositions to superimpose the histogram data, and corresponding receiving units A, B and C separately superimpose the histogram data based on numbers of echo superimpositions, namely, 10, 20 and 30, to form histogram data corresponding to the respective preset amplitude and the number of times. The control circuit 30 determines the distance information corresponding to the receiving unit based on the determined respective histogram data.

The receiving unit converts the optical signal into an echo pulse signal corresponding to an electrical signal type, and the control circuit performs the corresponding histogram data superimposition on the multiple echo pulse signals obtained after receiving and conversion, to obtain histogram data with the corresponding peak value, timing and area.

Further, in order to ensure that the histogram data obtained by superimposing the obtained echo data reaches a preset energy intensity range, as shown in FIG. 7, the ranging adjustment method of the LiDAR device also includes:

　　Step S50: Obtain a peak value of the histogram data.

Step S60: Determine whether the peak value of the histogram data is less than a preset threshold.

Step S70: When the peak value of the histogram data is less than the preset threshold, adjust the number of emissions and/or emission power for a next emission.

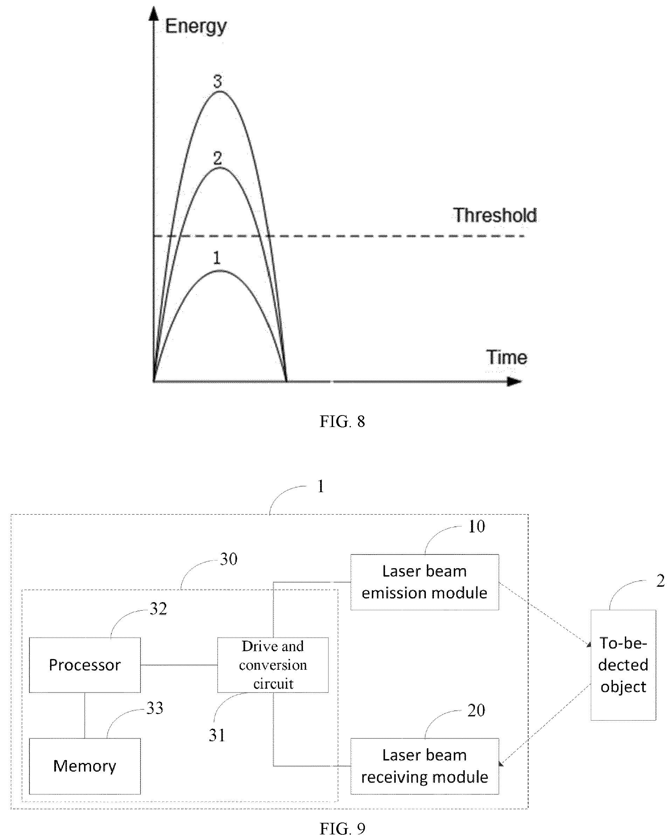

For example, FIG. 8 is a diagram of an echo waveform formed by a histogram. It can be seen that a peak value of an echo 1 is less than an energy threshold, it is necessary to increase the number of emissions and/or the emission power based on the echo energy before the next emission, an echo 2 and an echo 3 are greater than the energy threshold, and therefore, it is unnecessary to adjust the number of emissions and/or the emission power for the next time based on the echo.

It can be understood that when the determined peak value of the histogram data is less than the preset threshold, the number of emissions and/or the emission power are increased. Specifically, the next adjustment can be made based on a power consumption requirement or a setting requirement of the detection frequency. For example, if the power consumption has reached the set threshold, the number of emissions is adjusted priorly; or if the detection frequency has reached the preset threshold, the emission power is adjusted priorly. Alternatively, the number of emissions and/or the emission power are adjusted based on preset adjustment timing.

In this embodiment, after the control circuit obtains the corresponding histogram data by performing data superimposition on the echo laser beam signal based on the determined number of echo superimpositions, a peak value of the histogram data is further compared and determined. When the peak value of the histogram data is excessively small, it is possible that the distance information of the to-be-detected object cannot be calculated via the obtained histogram data, resulting in failure of ranging. Therefore, in order to improve the accuracy of ranging, the control circuit adjusts the number of laser beam emissions and the emission power of the emission unit when scanning the emission unit and the corresponding receiving unit next time, for example, synchronously increases the number of emissions and the emission power, so that a peak value of the next superimposed histogram data reaches a threshold required for ranging, thereby improving the accuracy of ranging.

It should be understood that a sequence number of each step in the foregoing embodiments does not mean an execution sequence. An execution sequence of each process should be determined based on a function and internal logic of each process, and should not constitute any limitation to an implementation process of the embodiments of the present invention.

The embodiments of the present invention have beneficial effects: in the foregoing ranging adjustment method of a LiDAR device 1, the position information of the receiving unit corresponding to the emission unit to perform scanning is determined, and a table is queried based on the position information to determine the attenuation coefficient of the receiving unit; the number of required laser beam emissions and/or the emission power is calculated based on the attenuation coefficient, and laser beam emission and reception work is performed based on the number of laser beam emissions and/or the emission power; and the corresponding histogram data is obtained based on the number of echo superimpositions of the corresponding histogram, the distance information of the to-be-detected object 2 is determined based on the histogram data, and the number of laser beam emissions and/or the emission power of the emission unit corresponding to the receiving unit at the corresponding position is adjusted, so that ranging accuracy and a ranging capability are improved and the entire receiving array has the same ranging capability, thereby improving uniformity of ranging capabilities.

A second aspect of the embodiments of the present invention provides a LiDAR device 1. As shown in FIG. 9, the LiDAR device 1 includes a laser beam emission module 10, a laser beam receiving module 20, and a control circuit 30 respectively connected to the laser beam emission module 10 and the laser beam receiving module 20, where the control circuit 30 includes a drive and conversion circuit 31, a memory 33, a processor 32, and a computer program stored in the memory 33 and executable on the processor 32 which, when executed by the processor 32, causes the drive and conversion circuit 31 to correspondingly implement steps of the foregoing ranging adjustment method of a LiDAR device 1.

The laser beam receiving module includes receiving units arranged into an array.

In this embodiment, the laser beam emission module 10 consists of a single emission unit or m1 (rows) x n1 (columns) emission units arranged into an array, and the laser beam receiving module 20 consists of m2 (rows) x n2 (columns) receiving units arranged into an array, where m1 and n1 are both greater than or equal to 1, m2 and n2 are both greater than or equal to 1, m1 and m2 can be equal or unequal, and likewise, n1 and n2 can be equal or unequal. That is, optionally, the number of rows and the number of columns of the emission array can be in a one-to-one correspondence with those of the receiving array. Optionally, the emission array and the receiving array can have unequal numbers of rows and equal numbers of columns. Optionally, the emission array and the receiving array can have equal numbers of rows and unequal numbers of columns. This application imposes no limitation on specific structures of the emission array and the receiving array.

It can be understood that this application also imposes no limitation on a scanning form of the LiDAR. The LiDAR can include scanning members such as a rotating mirror or a galvanometer, and the LiDAR can also be a mechanical rotary LiDAR, that is, a turntable drives the emission array and the receiving array to rotate and scan. Optionally, the LiDAR in this application may also be pure solid-state LiDAR. A specific type of LiDAR is not limited in this application.

The emission units and the receiving units may be disposed one to many or many to many, the laser beam emission module 10 also includes an emission lens disposed in an array structure, the emission lens consists of one or more lenses, the laser beam receiving module 20 also includes a receiving lens disposed in the array structure, the receiving lens consists of one or more lenses, and the laser beam emission module 10 is driven by the control circuit 30 to emit a laser beam of corresponding power and/or the number of laser beams to the to-be-detected object 2. The laser beam is reflected by the to-be-detected object 2 back to the laser beam receiving module 20, and the receiving unit receives the corresponding echo laser beam signal through the receiving lens, and the echo laser beam signal is converted into a corresponding echo pulse signal. The processor 32 determines the corresponding histogram data based on the echo pulse signal.

In addition, the processor 32 obtains the position information of the to-be-scanned receiving unit, and queries the table to obtain a matched attenuation coefficient. The attenuation coefficient refers to a ratio of the number of received photons to the number of incident photons. For example, when 100 photons are incident, the receiving unit receives 80 photons, and it indicates that the attenuation coefficient is 80%, that is, 0.8. When the attenuation coefficient is 1, it indicates that the number of photons incident on the receiving lens is equal to the number of received photons, and the number of photons is not attenuated, thereby obtaining the maximum attenuation coefficient. The attenuation coefficient is related to the position and a material of the receiving lens. An attenuation coefficient of each receiving unit can be calculated and calibrated theoretically based on a position relationship and an angle, or can be calibrated based on actual optical detection, that is, the attenuation coefficient of each receiving unit is calculated theoretically based on a divergence angle of an outgoing light spot of the corresponding emission unit and/or is calibrated and determined via optical detection. After the attenuation coefficient of each receiving unit is determined, the attenuation coefficient and the position relationship of each receiving unit form mapping and are stored in the memory 33 to form the attenuation coefficient table.

In addition, in order to improve the ranging accuracy and the ranging capability and reduce design costs and simplify a structure of the emission unit, the processor 32 controls the drive and conversion circuit 31 to increase the number of laser beam emissions and/or the emission power, to increase the accuracy of ranging. In addition, in order to match the attenuation coefficients with different receiving units, the number of laser beam emissions and/or the emission power is determined in a corresponding calculation method. Herein, the attenuation coefficient is negatively correlated with the number of laser beam emissions, that is, the larger the attenuation coefficient of the receiving unit, the smaller the number of required laser beam emissions; or the smaller the attenuation coefficient of the receiving unit, the larger the number of required laser beam emissions.

In addition, the attenuation coefficient is negatively correlated with the emission power, that is, the larger the attenuation coefficient of the receiving unit, the smaller the emission power required for the corresponding emission unit; or the smaller the attenuation coefficient of the receiving unit, the larger the emission power required for the corresponding emission unit.

When the emission unit and the receiving unit are disposed one to one to perform emission and reception, the attenuation coefficient of the receiving unit to perform scanning is used to calculate the attenuation coefficient corresponding to the number of laser beam emissions and/or the emission power, and the attenuation coefficient of the receiving unit is used to determine the number of laser beam emissions and/or the emission power. The processor 32 performs corresponding histogram data superimposition on the echo laser beam signal based on the corresponding number of echo superimpositions, thereby forming the histogram data. In addition, the histogram data is used to determine the distance information of the to-be-detected object 2, where the number of laser beam emissions is greater than or equal to the number of echo superimpositions.

In addition, when the emission units and the receiving units are disposed one to many or many to many to perform emission and reception, in order to improve the overall uniformity of ranging and ensure that multiple receiving units all can receive echo laser beam signals corresponding to the number of emissions and/or the emission power, position information of multiple receiving units corresponding to the emission unit to perform scanning is obtained, and the table is queried to obtain the attenuation coefficients matching the multiple receiving units. In addition, the number of laser beam emissions of the corresponding emission unit is determined via the minimum attenuation coefficient, to ensure that the multiple receiving units corresponding to the emission unit can receive multiple echo laser beam signals corresponding to a laser beam emitted by the emission unit. For example, attenuation coefficients of four receiving units corresponding to the emission unit to perform scanning are 0.6, 0.6, 0.4, and 0.2 separately. The attenuation coefficient of 0.2 is used as a target attenuation coefficient, and the number of laser beam emissions and/or the emission power is calculated based on the target attenuation coefficient to determine the number of laser beam emissions and/or the emission power.

In addition, based on the respective attenuation coefficients of the receiving units, respective corresponding numbers of echo superimpositions are determined.

After the number of laser beam emissions and the corresponding echo superimpositions of the to-be-scanned emission unit are determined, the processor 32 controls the drive and conversion circuit 31 to drive the corresponding to-be-scanned emission unit and at least one receiving unit to perform continuous laser beam emission and reception work multiple times. In addition, the processor 32 forms the histogram data based on multiple echo pulse signals in a changing time sequence that are converted by the receiving unit, determines a time difference between laser beam emission and reception via any calculation policy of constant-ratio timing calculation, peak value calculation and half-value calculation and determines the distance information of the to-be-detected object 2 based on the time difference and a speed of light.

The emission unit includes a laser such as a gas laser, a solid-state laser, or a semiconductor laser. The laser emits a laser beam under action of the drive and conversion circuit 31. The laser beam emission module 10 also includes an emission lens disposed corresponding to the laser. The emission lens is disposed relative to one or more lasers. In addition, the receiving unit includes a photoelectric converter, the laser beam receiving module 20 also includes at least one receiving lens disposed corresponding to multiple photoelectric converters, and the photoelectric converter converts the reflected echo laser beam signal into an echo pulse signal of a corresponding electrical signal type, and the echo pulse signal is converted and output to the processor 32 through the drive and conversion circuit 31 to determine the histogram data and determine the distance information of the to-be-detected object 2. Herein, the receiving lens is disposed relative to one or more photoelectric converters.

The photoelectric converter can use a corresponding photoelectric structure. Optionally, the photoelectric converter includes a photoelectric conversion diode, and the photoelectric conversion diode completes photoelectric conversion. Any one of a silicon photodiode, Avalanche Photo Diode, PIN photodiode, Schottky barrier photodiode, HgCdTe photovoltaic diode, or the like can be selected as the photoelectric conversion diode. Specifically, the photoelectric conversion diode is selected based on a requirement of the LiDAR device 1. Optionally, the photoelectric conversion diode is Single Photon Avalanche Diode (SPAD).

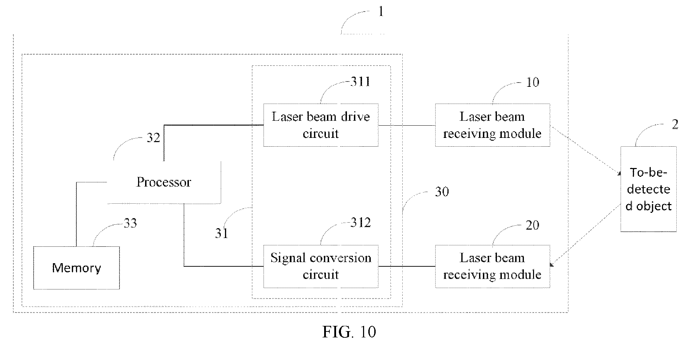

The drive and conversion circuit 31 completes drive work of the emission unit and signal conversion work of the receiving unit, and can use a corresponding laser beam drive circuit 311 and a signal processing circuit, for example, a charging and discharging circuit, an amplifier, and other structures. As shown in FIG. 10, optionally, the drive and conversion circuit 31 includes:

a laser beam drive circuit 311 respectively connected to the processor 32 and the laser beam emission module 10, where the laser beam drive circuit 311 is configured to be correspondingly turned on or off based on a control signal output by the processor 32, and to adjust the number of laser beam emissions and/or emission power of the emission unit in a frame of a scanning image; and

a signal conversion circuit 312 respectively connected to the laser beam receiving module 20 and the processor 32, where the signal conversion circuit 312 is configured to: convert a current signal converted and output by the receiving unit into a corresponding echo pulse signal, and output the echo pulse signal to the processor 32.

The laser beam drive circuit 311 is driven by a drive control signal output by the processor 32 to drive the laser to work, and the laser emits a laser beam based on the preset power and the corresponding number of emissions, so that the receiving unit receives multiple corresponding echo laser beam signals. In addition, when an echo laser beam signal is received, the photoelectric converter and the signal conversion circuit 312 sequentially convert an optical signal into a current signal and convert the current signal into a voltage signal, and output multiple echo pulse signals to the processor 32, and the processor 32 determines the corresponding histogram data and the distance information of the to-be-detected object 2.

The laser beam drive circuit 311 can use a corresponding charging and discharging circuit, and the charging and discharging circuit is connected to the laser correspondingly to implement charging and discharging drive work multiple times. The signal conversion circuit 312 can use a transconductance amplifier, a detection circuit, and the like to complete conversion of the electrical signal, detect and collect the echo signal, and perform conversion and output multiple echo pulse signals to the processor 32. The processor 32 obtains corresponding histogram data based on the multiple echo pulse signals, and then achieves a purpose of ranging the to-be-detected object 2.

The foregoing embodiments are merely intended to describe the technical solutions of the present invention, but not to limit the present invention as set out in the appended set of claims.

**Claims**

1. A ranging adjustment method of a LiDAR device (1), wherein the LiDAR device comprises a laser beam emission module (10) and a laser beam receiving module (20), and the laser beam receiving module comprises receiving units arranged into an array, the ranging adjustment method of a LiDAR device comprising the following steps:

obtaining position information of a receiving unit corresponding to an emission unit (S10), obtaining a correspondence between the emission unit and the receiving unit; and querying a table to obtain an attenuation coefficient matching the receiving unit; calculating a number of continuous laser beam emissions and/or emission power for the emission unit corresponding to the receiving unit in a frame of a scanning image based on the attenuation coefficient (S20); driving the emission unit to emit a laser beam based on the number of emissions and/or the emission power, simultaneously driving the receiving unit corresponding to the emission unit to receive a corresponding echo laser beam signal, the method being **characterized in** comprising the further steps of:

> superimposing the echo laser beam signal into corresponding histogram data (S30); and
> determining distance information of a to-be-detected object (2) based on the histogram data (S40)
> wherein
> the step of querying a table to obtain an attenuation coefficient matching the receiving unit comprises:
>
>> querying the table based on the correspondence to obtain the attenuation coefficient matching the receiving unit, wherein
>> when the correspondence between the emission unit and the receiving unit is a one-to-one correspondence, the attenuation coefficient matching the receiving unit is determined to be an attenuation coefficient of the receiving unit corresponding to the emission unit; or when the correspondence between the emission unit and the receiving unit is a one-to-many or many-to-many correspondence, the attenuation coefficient matching the receiving unit is determined to be a minimum one of attenuation coefficients of multiple receiving units corresponding to the emission unit.

2. The ranging adjustment method of a LiDAR device according to claim 1, wherein a formula for calculating the number of superimpositions of the histogram data corresponding to the receiving unit is as follows:

$$num2 = (\frac{coe1}{coe2})^2 * num1$$

wherein $coe1$ is an attenuation coefficient of a reference receiving unit, $coe2$ is an attenuation coefficient of the receiving unit corresponding to the emission unit, $num1$ is the number of superimpositions of histogram data corresponding to the reference receiving unit, and $num2$ is the number of superimpositions of histogram data corresponding to the receiving unit corresponding to the emission unit.

3. The ranging adjustment method of a LiDAR device according to claim 2, wherein the steps of driving the corresponding receiving unit to receive a corresponding echo laser beam signal, and superimposing the echo laser beam signal into corresponding histogram data comprise:

> obtaining an attenuation coefficient of the receiving unit corresponding to the emission unit; calculating the number of echo superimpositions for the receiving unit based on the attenuation coefficient of the receiving unit; and performing corresponding histogram data superimposition on the echo laser beam signal based on the number of the echo superimpositions to form the corresponding histogram data.

4. The ranging adjustment method of a LiDAR device according to claim 1, further comprising:

> obtaining a peak value of the histogram data; determining whether the peak value of the histogram data is less than a preset threshold; and when the peak value of the histogram data is less than the preset threshold, adjusting the number of emissions and/or emission power for a next emission.

5. A LiDAR device (1), comprising a laser beam emission module (10), a laser beam receiving module (20), and a control circuit (30) respectively connected to the laser beam emission module (10) and the laser beam receiving module (20), wherein:

> the control circuit (30) comprises a drive and conversion circuit (31), a memory (33), a processor (32), and a computer program stored in the memory (33) and executable on the processor (32) which, when executed by the processor (32), causes the processor (32) to correspondingly drive the drive and conversion circuit (31) to implement all the steps of the ranging adjustment method of a LiDAR device according to any one of claims 1 to 4; and the laser beam receiving module (20) comprises receiving units arranged into an array.

6. The LiDAR device according to claim 5, wherein the drive and conversion circuit comprises:

a laser beam drive circuit respectively connected to the processor and the laser beam emission module, wherein the laser beam drive circuit is configured to be correspondingly turned on or off based on a control signal output by the processor, and to adjust the number of laser beam emissions and/or emission power of an emission unit in a frame of a scanning image; and

a signal conversion circuit respectively connected to the laser beam receiving module and the processor, wherein the signal conversion circuit is configured to: convert a current signal converted and output by one of the receiving units into a corresponding echo pulse signal, and output the echo pulse signal to the processor.

## Patentansprüche

1. Entfernungsmesseinstellungsverfahren für ein LiDAR-Gerät (1),
   wobei das LiDAR-Gerät ein Laserstrahl-Emissionsmodul (10) und ein Laserstrahl-Empfangsmodul (20) umfasst, und das Laserstrahl-Empfangsmodul Empfangseinheiten in Arrayanordnung aufweist, wobei das Entfernungsmesseinstellungsverfahren für ein LiDAR-Gerät folgende Schritte umfasst:

   Erhalt von Positionsinformationen einer Empfangseinheit, die einer Emissionseinheit entspricht (S10), Erhalt einer Korrespondenz zwischen der Emissionseinheit und der Empfangseinheit;
   und Tabellenabfrage, um einen Dämpfungskoeffizienten zu erhalten, der zur Empfangseinheit passt;
   Berechnung einer Anzahl von kontinuierlichen Laserstrahl-Emissionen und/oder Emissionsleistung für die Emissionseinheit, die der Empfangseinheit in einem Rahmen eines Scanbilds entspricht, auf der Grundlage des Dämpfungskoeffizienten (S20);
   Ansteuerung der Emissionseinheit, um einen Laserstrahl zu emittieren, auf der Grundlage der Anzahl von Emissionen und/oder der Emissionsleistung, gleichzeitige Ansteuerung der Empfangseinheit, die der Emissionseinheit entspricht, um ein entsprechendes Echo-Laserstrahlsignal zu empfangen, wobei das Verfahren **dadurch gekennzeichnet ist, dass** es die weiteren Schrtte umfasst:

   Überlagerung des Echo-Laserstrahlsignals in entsprechende Histogrammdaten (S30);
   und Bestimmung von Distanzinformationen eines zu detektierenden Objekts (2) auf der Grundlage der Histogrammdaten (S40);
   wobei
   der Schritt der Tabellenabfrage, um einen Dämpfungskoeffizienten zu erhalten, der zur Empfangseinheit passt, umfasst:

   Tabellenabfrage auf der Grundlage der Korrespondenz, um den Dämpfungskoeffizienten zu erhalten, der zur Empfangseinheit passt, wobei
   wenn die Korrespondenz zwischen der Emissionseinheit und der Empfangseinheit eine eins-zu-eins-Korrespondenz ist, der Dämpfungskoeffizient, der zur Empfangseinheit passt, als ein Dämpfungskoeffizient der Empfangseinheit, die der Emissionseinheit entspricht, bestimmt wird; oder wenn die Korrespondenz zwischen der Emissionseinheit und der Empfangseinheit eine eins-zu-viele- oder viele-zu-viele-Korrespondenz ist, der Dämpfungskoeffizient, der zur Empfangseinheit passt, als ein kleinster von Dämpfungskoeffizienten mehrerer Empfangseinheiten, die der Emissionseinheit entsprechen, bestimmt wird.

2. Entfernungsmesseinstellungsverfahren für ein LiDAR-Gerät nach Anspruch 1, wobei eine Formel zur Berechnung der Überlagerungsanzahl der Histogrammdaten, die der Empfangseinheit entsprechen, wie folgt lautet:

$$num2 = (\frac{coe1}{coe2})^2 * num1 \text{,}$$

   wobei $coe1$ ein Dämpfungskoeffizient einer Referenzempfangseinheit ist, $coe2$ ein Dämpfungskoeffizient der Empfangseinheit, die der Emissionseinheit entspricht, ist, $num1$ die Überlagerungsanzahl von Histogrammdaten, die der Referenzempfangseinheit entsprechen, ist, und $num2$ die Überlagerungsanzahl von Histogrammdaten, die der Empfangseinheit, die der Emissionseinheit entspricht, ist.

3. Entfernungsmesseinstellungsverfahren für ein LiDAR-Gerät nach Anspruch 2, wobei die Schritte des Ansteuerns der entsprechenden Empfangseinheit zum Empfangen eines entsprechenden Echo-Laserstrahlsignals und des Überlagerns des Echo-Laserstrahlsignals in entsprechende Histogrammdaten Folgendes umfassen:

   Ermitteln eines Dämpfungskoeffizienten der Empfangseinheit, die der Emissionseinheit entspricht;

Berechnen der Anzahl von Echoüberlagerungen für die Empfangseinheit auf der Grundlage des Dämpfungskoeffizienten der Empfangseinheit; und

Durchführen von entsprechender Histogrammdatenüberlagerung an dem Echo-Laserstrahlsignal auf der Grundlage der Anzahl der Echoüberlagerungen, um die entsprechenden Histogrammdaten zu bilden.

**4.** Entfernungsmesseinstellungsverfahren für ein LiDAR-Gerät nach Anspruch 1, ferner umfassend:
Ermitteln eines Spitzenwerts der Histogrammdaten;
Bestimmen, ob der Spitzenwert der Histogrammdaten kleiner als der voreingestellte Schwellenwert ist; und, wenn der Spitzenwert der Histogrammdaten kleiner als der voreingestellte Schwellenwert ist, Anpassen der Anzahl von Emissionen und/oder der Emissionsleistung für eine nächste Emission.

**5.** LiDAR-Gerät (1), umfassend ein Laserstrahl-Emissionsmodul (10), ein Laserstrahl-Empfangsmodul (20) und eine Steuerschaltung (30), die jeweils mit dem Laserstrahl-Emissionsmodul (10) und dem Laserstrahl-Empfangsmodul (20) verbunden sind, wobei:

die Steuerschaltung (30) eine Ansteuer- und Wandlungsschaltung (31), einen Speicher (33), einen Prozessor (32) und ein in dem Speicher (33) gespeichertes und auf dem Prozessor (32) ausführbares Computerprogramm umfasst, das, wenn es von dem Prozessor (32) ausgeführt wird, den Prozessor (32) veranlasst, die Ansteuer- und Wandlungsschaltung (31) entsprechend anzusteuern, um alle Schritte des Entfernungsmesseinstellungsverfahrens für ein LiDAR-Gerät nach einem der Ansprüche 1 bis 4 auszuführen; und

das Laserstrahl-Empfangsmodul (20) in einem Array angeordnete Empfangseinheiten umfasst.

**6.** LiDAR-Gerät nach Anspruch 5, wobei die Ansteuer- und Wandlungsschaltung umfasst: eine Laserstrahlansteuerschaltung, die jeweils mit dem Prozessor und dem Laserstrahl-Emissionsmodul verbunden ist, wobei die Laserstrahlansteuerschaltung dazu konfiguriert ist, basierend auf einem von dem Prozessor ausgegebenen Steuersignal entsprechend ein- oder ausgeschaltet zu werden und die Anzahl von Laserstrahlemissionen und/oder die Emissionsleistung einer Emissionseinheit in einem Rahmen eines Scanbildes einzustellen; und eine Signalwandlungsschaltung, die jeweils mit dem Laserstrahl-Empfangsmodul und dem Prozessor verbunden ist, wobei die Signalwandlungsschaltung dazu konfiguriert ist: ein von einer der Empfangseinheiten umgewandeltes und ausgegebenes Stromsignal in ein entsprechendes Echolpulssignal umzuwandeln und das Echolpulssignal an den Prozessor auszugeben.

**Revendications**

**1.** Méthode d'ajustement de télémétrie pour dispositif LiDAR (1),
ledit dispositif LiDAR comprenant un module d'émission de faisceau laser (10) et un module de réception de faisceau laser (20), et le module de réception de faisceau laser comprend des unités de réception agencées en réseau, la méthode d'ajustement de télémétrie pour dispositif LiDAR comprenant les étapes suivantes :

obtention des informations de position d'une unité de réception correspondant à une unité d'émission (S10), établissement d'une correspondance entre l'unité d'émission et l'unité de réception ;
et consultation d'une table pour obtenir un coefficient d'atténuation correspondant à l'unité de réception;
calcul d'un nombre d'émissions continues de faisceau laser et/ou de la puissance d'émission pour l'unité d'émission correspondant à l'unité de réception dans une trame d'une image de balayage, sur la base du coefficient d'atténuation (S20);
commande de l'unité d'émission pour émettre un faisceau laser sur la base du nombre d'émissions et/ou de la puissance d'émission, tout en commandant l'unité de réception correspondant à l'unité d'émission pour recevoir un signal d'écho de faisceau laser correspondant, la méthode étant **caractérisée en ce qu'**elle comprend les étapes supplémentaires de :

superposition du signal d'écho de faisceau laser en données d'histogramme correspondantes (S30); et
détermination des informations de distance d'un objet à détecter (2) sur la base des données d'histogramme (S40);
dans laquelle l'étape de consultation d'une table pour obtenir un coefficient d'atténuation correspondant à l'unité de réception comprend:

la consultation de la table sur la base de la correspondance pour obtenir le coefficient d'atténuation correspondant à l'unité de réception, où
lorsque la correspondance entre l'unité d'émission et l'unité de réception est une correspondance un-à-un, le coefficient d'atténuation correspondant à l'unité de réception est déterminé comme étant un coefficient d'atténuation de l'unité de réception correspondant à l'unité d'émission ; ou lorsque la correspondance entre l'unité d'émission et l'unité de réception est une correspondance un-à-plusieurs ou plusieurs-à-plusieurs, le coefficient d'atténuation correspondant à l'unité de réception est déterminé comme étant un coefficient minimum parmi des coefficients d'atténuation de multiples unités de réception correspondant à l'unité d'émission.

2. Méthode d'ajustement de télémétrie pour dispositif LiDAR selon la revendication 1, dans laquelle une formule de calcul du nombre de superpositions des données d'histogramme correspondant à l'unité de réception est la suivante:

$$num2 = (\frac{coe1}{coe2})^2 * num1 \quad ,$$

où *coe*1 est un coefficient d'atténuation d'une unité de réception de référence, *coe2* est un coefficient d'atténuation de l'unité de réception correspondant à l'unité d'émission, *num*1 est le nombre de superpositions de données d'histogramme correspondant à l'unité de réception de référence, et *num2* est le nombre de superpositions des données d'histogramme correspondant à l'unité de réception correspondant à l'unité d'émission.

3. Méthode d'ajustement de télémétrie pour dispositif LiDAR selon la revendication 2, dans laquelle les étapes de commande de l'unité de réception correspondante pour recevoir un signal d'écho de faisceau laser correspondant, et de superposition du signal d'écho de faisceau laser en données d'histogramme correspondantes comprennent:

l'obtention d'un coefficient d'atténuation de l'unité de réception correspondant à l'unité d'émission;
le calcul du nombre de superpositions d'écho pour l'unité de réception sur la base du coefficient d'atténuation de l'unité de réception; et
la réalisation d'une superposition correspondante de données d'histogramme sur le signal d'écho de faisceau laser sur la base du nombre des superpositions d'écho pour former les données d'histogramme correspondantes.

4. Méthode d'ajustement de télémétrie pour dispositif LiDAR selon la revendication 1, comprenant en outre:

l'obtention d'une valeur de pic des données d'histogramme;
la détermination si la valeur de pic des données d'histogramme est inférieure à un seuil prédéfini; et
lorsque la valeur de pic des données d'histogramme est inférieure au seuil prédéfini, l'ajustement du nombre d'émissions et/ou de la puissance d'émission pour une émission suivante.

5. Dispositif LiDAR (1), comprenant un module d'émission de faisceau laser (10), un module de réception de faisceau laser (20), et un circuit de commande (30) respectivement connecté au module d'émission de faisceau laser (10) et au module de réception de faisceau laser (20), dans lequel :

le circuit de commande (30) comprend un circuit d'attaque et de conversion (31), une mémoire (33), un processeur (32), et un programme informatique stocké dans la mémoire (33) et exécutable sur le processeur (32) qui, lorsqu'il est exécuté par le processeur (32), amène le processeur (32) à commander de manière correspondante le circuit d'attaque et de conversion (31) pour mettre en œuvre toutes les étapes de la méthode d'ajustement de télémétrie pour dispositif LiDAR selon l'une quelconque des revendications 1 à 4 ; et
le module de réception de faisceau laser (20) comprend des unités de réception agencées en réseau.

6. Dispositif LiDAR selon la revendication 5, dans lequel le circuit d'attaque et de conversion comprend:

un circuit d'attaque de faisceau laser respectivement connecté au processeur et au module d'émission de faisceau laser, le circuit d'attaque de faisceau laser est configuré pour être activé ou désactivé de manière correspondante sur la base d'un signal de commande émis par le processeur, et pour ajuster le nombre d'émissions de faisceau laser et/ou la puissance d'émission d'une unité d'émission dans une trame d'une image de balayage; et
un circuit de conversion de signal respectivement connecté au module de réception de faisceau laser et au processeur, le circuit de conversion de signal étant configuré pour: convertir un signal de courant converti et émis par l'une des unités de réception en un signal d'impulsion d'écho correspondant, et émettre le signal d'impulsion d'écho au processeur.

FIG. 1

FIG. 2

Obtain position information of a receiving unit corresponding to a to-be-scanned emission unit, and query a table to obtain an attenuation coefficient matching a receiving unit — S10

Calculate the number of continuous laser beam emissions and/or emission power of the emission unit corresponding to the receiving unit in a frame of a scanning image based on the attenuation coefficient — S20

Drive the emission unit to emit a laser beam based on the number of emissions and/or the emission power, simultaneously drive the receiving unit corresponding to the emission unit to receive a corresponding echo laser beam signal, and superimpose the echo laser beam signal into corresponding histogram data — S30

Determine distance information of a to-be-detected object based on the histogram data — S40

FIG. 3

| 0 | 1 | 2 | 3 | 4 | 5 | 6 | 7 | 8 | 9 | 10 | 11 | |
|---|---|---|---|---|---|---|---|---|---|----|----|---|
| 0.2 | 0.4 | 0.5 | 0.6 | 0.7 | 0.7 | 0.7 | 0.7 | 0.6 | 0.5 | 0.4 | 0.2 | A |
| 0.3 | 0.5 | 0.6 | 0.7 | 0.8 | 0.8 | 0.8 | 0.8 | 0.7 | 0.6 | 0.5 | 0.3 | B |
| 0.4 | 0.6 | 0.7 | 0.8 | 0.9 | 0.9 | 0.9 | 0.9 | 0.8 | 0.7 | 0.6 | 0.4 | C |
| 0.4 | 0.6 | 0.7 | 0.8 | 0.9 | 1.0 | 1.0 | 0.9 | 0.8 | 0.7 | 0.6 | 0.4 | D |
| 0.4 | 0.6 | 0.7 | 0.8 | 0.9 | 1.0 | 1.0 | 0.9 | 0.8 | 0.7 | 0.6 | 0.4 | E |
| 0.4 | 0.6 | 0.7 | 0.8 | 0.9 | 0.9 | 0.9 | 0.9 | 0.8 | 0.7 | 0.6 | 0.4 | F |
| 0.3 | 0.5 | 0.6 | 0.7 | 0.8 | 0.8 | 0.8 | 0.8 | 0.7 | 0.6 | 0.5 | 0.3 | G |
| 0.2 | 0.4 | 0.5 | 0.6 | 0.7 | 0.7 | 0.7 | 0.7 | 0.6 | 0.5 | 0.4 | 0.2 | H |

FIG. 4

Obtain an attenuation coefficient of the receiving unit corresponding to the emission unit — S31

Calculate the number of echo superimpositions of the receiving unit based on the attenuation coefficient of the receiving unit — S32

Perform corresponding histogram data superimposition on the echo laser beam signal based on the number of echo superimpositions to form the corresponding histogram data — S33

FIG. 5

Perform any calculation policy of constant-ratio timing calculation, peak value calculation and half-value calculation on the histogram data to determine a time difference between laser beam emission and reception — S41

Determine the distance information of the to-be-detected object based on the time difference — S42

FIG. 6

Obtain a peak value of the histogram data — S50

Determine whether the peak value of the histogram data is less than a preset threshold — S60

When the peak value of the histogram data is less than the preset threshold, adjust the number of emissions and emission power for a next emission — S70

FIG. 7

FIG. 8

FIG. 9

FIG. 10

**EP 4 293 383 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021176389 A1

- CN 113777584 A